Europäisches Patentamt

(19) European Patent Office

Office européen des brevets

(11) Numéro de publication : **0 248 487 B1**

(12) **FASCICULE DE BREVET EUROPEEN**

(45) Date de publication du fascicule du brevet :
**27.12.91 Bulletin 91/52**

(51) Int. Cl.$^5$ : **C08G 2/22**

(21) Numéro de dépôt : **87201010.3**

(22) Date de dépôt : **29.05.87**

(54) **Procédé pour la fabrication de polyacétals.**

(30) Priorité : **06.06.86 FR 8608330**

(43) Date de publication de la demande :
**09.12.87 Bulletin 87/50**

(45) Mention de la délivrance du brevet :
**27.12.91 Bulletin 91/52**

(84) Etats contractants désignés :
**AT BE DE ES FR GB IT NL**

(56) Documents cités :
**DE-A- 1 570 335**
**US-A- 3 027 352**
**US-A- 3 197 437**

(56) Documents cités :
**PATENT ABSTRACTS OF JAPAN, vol. 3, no.**
**109, 12 septembre 1979, page 77 C 58; &**
**JP-A-54 87 792 (MITSUBISHI GAS KAGAKU**
**K.K.) 07-12-1979**

(73) Titulaire : **SOLVAY & Cie (Société Anonyme)**
**Rue du Prince Albert, 33**
**B-1050 Bruxelles (BE)**

(72) Inventeur : **Hardy, Nicolas**
**Allée du Souvenir, 13**
**B-5730 Malonne (BE)**

(74) Mandataire : **Nichels, William et al**
**Solvay & Cie Département de la Propriété**
**Industrielle Rue de Ransbeek, 310**
**B-1120 Bruxelles (BE)**

## Description

La présente invention concerne un procédé pour la fabrication de polyacétals. Elle concerne plus particulièrement un procédé pour cette fabrication impliquant l'utilisation de trioxane comme monomère principal et la dépolymérisation par hydrolyse sélective des extrémités des chaînes macromoléculaires des polyacétals.

On sait, notamment par l'article de K. WEISSERMEL et al., publié dans Angew. Chem., Vol, 79, n° 11, p. 512 et suivantes (1967), que les polyoxyméthylènes ou polyacétals comprenant des enchaînements de motifs récurrents -CH$_2$O- sont obtenus par polymérisation de formaldéhyde ou de son trimère cyclique, le trioxane. Dans ce dernier cas, on emploie traditionnellement des initiateurs cationiques. Pour réduire la tendance de ces polymères à se décomposer partiellement sous l'action de la chaleur ou d'un alcali, il est connu de copolymériser le trioxane avec un autre composé utilisé en moindre proportion, par exemple un éther cyclique, un acétal cyclique, un ester cyclique ou un composé vinylique. La polymérisation du trioxane peut être réalisée à l'état solide, en fusion, en phase gazeuse, en suspension ou en solution. Pour la polymérisation en suspension on peut travailler en utilisant, comme milieu de suspension, de l'hexane, du cyclohexane, de l'heptane et des hydrocarbures à point d'ébullition plus élevé dans lesquels, toutefois, le trioxane monomère ne se dissout que partiellement. Comme initiateurs cationiques, les complexes de coordination du fluorure de bore avec des composés organiques électrodonneurs sont fréquemment mentionnés.

Afin d'améliorer encore la stabilité thermique des polyacétals obtenus, on peut, conventionnellement, effectuer une dépolymérisation par hydrolyse sélective des extrémités oxyméthyléniques instables des chaînes polymériques. Pareil moyen est décrit par exemple dans le brevet FR-A-1287151 de CELANESE CORP.

Un procédé conventionnel de fabrication de polyacétals à partir de trioxane comme monomère principal et avec stabilisation finale, par hydrolyse, du polymère obtenu, peut dès lors généralement comprendre les étapes successives schématisées ci-après :

– la synthèse du trioxane par trimérisation du formaldéhyde en phase acqueuse;

– la séparation du trioxane de ladite phase acqueuse;

– la purification du trioxane issu de l'étape ci-dessus, ainsi que du trioxane non polymérisé recyclé.

– la polymérisation du trioxane purifié en présence d'un initiateur cationique et d'un comonomère choisi parmi les éthers cycliques contenant au moins deux atomes de carbone adjacents;

– l'hydrolyse stabilisante du polyacétal obtenu;

– le traitement du mélange issu de l'étape d'hydrolyse pour en séparer une suspension aqueuse de polyacétal stabilisé.

En général, l'étape d'hydrolyse stabilisante est, pour des raisons d'efficacité, effectuée avec application de chaleur et de pression et le mélange qui en est issu est détendu; les vapeurs libérées, qui contiennent du trioxane non converti, de l'eau et du formaldéhyde généré par l'hydrolyse, sont ensuite condensées et le liquide condensé est généralement décanté en vue d'en séparer d'une part le trioxane, recyclé à l'étape de purification, et, d'autre part, l'eau et le formaldéhyde qui sont finalement éliminés le plus souvent par incinération.

Ce procédé, compliqué dans sa partie de traitement des vapeurs libérées par détente du mélange provenant de l'hydrolyse stabilisante, présente en outre l'inconvénient de donner lieu à un entraînement de polymère lors de cette détente, obstruant à la longue le condenseur et les circuits de recyclage. De plus, lorsque la polymérisation du trioxane est effectuée en suspension en présence d'un solvant organique, la partie de ce dernier qui n'est pas entraînée avec les vapeurs libérées lors de la détente du mélange provenant de l'étape d'hydrolyse stabilisante est présente dans la suspension aqueuse de polyacétal issue de cette étape et doit en être éliminée par un traitement complémentaire à la vapeur d'eau ("stripping").

La présente invention vise à fournir un procédé pour la fabrication de polyacétals ne présentant pas ces inconvénients.

L'invention concerne à cet effet un procédé pour la fabrication de polyacétals par polymérisation du trioxane comprenant comme étapes principales successives :

(a) la trimérisation de formaldéhyde en trioxane en phase aqueuse acide sous un vide au moins partiel;

(b) la séparation du trioxane de ladite phase aqueuse;

(c) la purification du trioxane;

(d) la polymérisation, en présence d'un solvant organique choisi parmi les hydrocarbures aliphatiques, cycloaliphatiques, aromatiques et leurs mélanges, du trioxane purifié en présence d'un initiateur cationique et d'un comonomère choisi parmi les éthers cycliques contenant au moins deux atomes de carbone adjacents;

(e) la stabilisation par hydrolyse à chaud sous pression des extrémités des chaînes macromoléculaires du polymère;

(f) la séparation, par détente, du mélange issu de l'étape (e), d'une part, en une suspension aqueuse du polymère stabilisé et, d'autre part, en une phase vapeur contenant le trioxane non polymérisé, le solvant organique, de l'eau et le formaldéhyde généré par l'hydrolyse;

(g) la récupération du polymère stabilisé à partir de sa suspension aqueuse;

la phase vapeur provenant de la séparation par détente du mélange issu de l'étape (e) étant recyclée directement à l'étape (a) de trimérisation du formaldéhyde.

Les étapes constitutives (a) à (g) du procédé selon l'invention sont connues dans leur principe et des modes de réalisation en sont décrits notamment dans "Petrochemical Developments", volume 45, No. 11, novembre 1966, pages 155 à 170 et dans le brevet FR-A-1287151 cité plus haut.

On mentionne ci-après les modes de réalisation généralement retenus pour l'exécution des étapes (a) à (g) du procédé selon l'invention.

L'étape (a) de trimérisation du formaldéhyde est effectuée sous un vide au moins partiel, en phase aqueuse générale agitée en présence d'un acide, qui est généralement un acide inorganique fort tel que l'acide sulfurique ou l'acide phosphorique, à une température suffisante pour éviter la précipitaton du trimère; la réaction étant équilibrée, on déplace l'équilibre par vaporisation d'une partie du milieu de trimérisation.

L'étape (b) de séparation du trioxane de la phase aqueuse en deux stades dont le premier (b1) consiste à enrichir la phase aqueuse en trioxane, de préférence par rectification, et dont le second (b2) consiste à extraire le trioxane de cette phase aqueuse, peut être réalisée par tout moyen conventionnel, tel que par exemple l'extraction et la cristallisation; on préfère opérer au moyen d'un solvant organique d'extraction (S) généralement choisi parmi les hydrocarbures aliphatiques, cycloaliphatiques, aromatiques et leurs mélanges.

A titre d'exemples d'hydrocarbures aliphatiques, on peut mentionner les alkanes, tels que le n-hexane, le n-heptane, le n-octane, le n-nonane, leurs isomères et mélanges.

A titre d'exemples d'hydrocarbures cycloaliphatiques, on peut mentionner les cycloalkanes, tels que le cyclohexane.

A titre d'exemples d'hydrocarbures aromatiques, on peut mentionner le benzène et ses dérivés de substitution tel que le toluène et les xylènes.

On préfère en général effectuer l'extraction du trioxane au moyen d'un hydrocarbure aliphatique, en particulier d'un alkane ou d'un mélange d'alkanes contenant de 7 à 9 atomes de carbone.

La phase aqueuse pauvre en trioxane, résultant d'autre part du stade (b2) d'extraction, est généralement traitée pour en séparer le formol non converti qui est de préférence recyclé (stade (b3)) à l'étape (a) de trimérisation.

L'étape (c) de purification du trioxane est réalisée en mettant en oeuvre des moyens conventionnels compatibles avec la forme physique et le degré de pureté souhaités pour l'étape de polymérisation (d).

Cette purification se fait généralement par au moins l'une des méthodes ci-après :

— distillation azéotropique d'un mélange contenant le trioxane, le solvant d'extraction (S) et un éventuel solvant organique, différent du solvant d'extraction (S) mais choisi parmi les mêmes hydrocarbures pour obtenir une solution suffisamment pure de trioxane dans l'un de ces solvants;

- cristallisation d'un mélange contenant le trioxane et le solvant d'extraction (S); cette cristallisation peut se faire par refroidissement ou par mélange avec du solvant (S) pur refroidi.

De préférence, l'étape (c) de purification du trioxane est effectuée en concentrant d'abord en trioxane le mélange de ce dernier avec le solvant d'extraction (S), par exemple par distillation azéotropique, et en recueillant ensuite le trioxane par cristallisation du mélange ainsi concentré.

L'étape (d) de polymérisation du trioxane purifié est effectuée, de manière connue, en présence d'un initiateur cationique à base d'un complexe de coordination de fluorure de bore avec un composé oxygéné organique contenant un atome électrodonneur tel que l'oxygène ou le soufre.

Les catalyseurs préférés sont les éthérates de fluorure de bore.

Dans le procédé selon l'invention, on effectue la polymérisation en présence d'un solvant organique dans lequel le trioxane est au moins partiellement soluble. Ce solvant organique est généralement choisi parmi les mêmes hydrocarbures que le solvant (S); par exemple choisi parmi les hydrocarbures aliphatiques; de préférence, il s'agit du solvant (S) lui-même.

Le milieu de polymérisation contient également une quantité appropriée d'un comonomère choisi parmi les éthers cycliques dont la molécule contient au moins deux atomes de carbone adjacents. A titre d'exemples de comonomères préférés, on peut citer l'oxyde d'éthylène, le 1,3-dioxolane, les 1,3- et 1,4-dioxane, le 1,3,5-trioxépane, le 1,3,6-trioxocane, l'épichlorhydrine et le 4-chlorométhyl-1,3-trioxolane, l'oxyde d'éthylène étant particulièrement préféré. En général, la polymérisation est conduite dans des conditions telles que la proportion d'unités récurrentes dérivées du comonomère sont présentes dans le polymère à raison de 0,1 à 10 % molaires, de préférence à raison de 1 à 4 % molaires.

L'étape (e) de stabilisation par hydrolyse du polymère obtenu est effectuée dans des conditions opératoires générales choisies de manière à provoquer une dépolymérisation, par hydrolyse sélective, des extrémités oxyméthyléniques comprises entre le dernier motif éthoxylé et le groupement terminal hydroxyle des chaînes macromoléculaires.

Cette hydrolyse peut s'effectuer en milieu organique, par exemple de même nature que le milieu de polymérisation; le milieu d'hydrolyse peut ainsi être avantageusement le milieu même de la polymérisation. Cette hydrolyse s'effectue généralement par addition au dit milieu, porté à une température inférieure à la température de dégradation du polymère et à une pression supérieure à la pression atmosphérique, d'eau contenant éventuellement un composé organique ou inorganique à caractère basique tel que les hydroxydes d'ammonium et de métaux alcalins ou alcalino-terreux, les amines, les urées, les alcools, etc. Une description détaillée de modes d'hydrolyse convenables est contenue par exemple dans le brevet US-A-3225005 de HOECHST.

L'étape (f) de détente du mélange issu de l'étape (e) est réalisée de manière à séparer de la suspension aqueuse de polymère stabilisé, une phase vapeur comprenant :

- le trioxane non polymérisé;
- de l'eau;
- le formaldéhyde généré par l'hydrolyse et
- le solvant organique.

Selon l'invention, et cette mesure en constitue une caractéristique essentielle, la phase vapeur ainsi séparée du mélange est recyclée directement à l'étape (a) de trimérisation du formaldéhyde.

Ce recyclage direct présente plusieurs avantages. Tout d'abord, si du polymère est éventuellement entraîné avec la phase vapeur, il est décomposé en formol dans le milieu de trimérisation et ne gêne plus.

Par ailleurs, il a été observé avec surprise que la suspension aqueuse de polymère stabilisé est quasi exempte de formaldéhyde. Selon le procédé de l'invention le formaldéhyde généré par l'hydrolyse peut donc être recyclé à l'étape (a) de trimérisation sans traitement complémentaire.

En outre, l'étape (a) de trimérisation étant effectuée sous un vide au moins partiel, les conditions de l'étape (f) de séparation par détente sont suffisantes pour séparer entièrement le solvant organique du mélange issu de l'étape (e). La suspension aqueuse de polymère stabilisé ne doit donc être soumise à aucun traitement d'élimination (par exemple par "stripping") du solvant organique résiduaire.

L'étape (g) de récupération du polymère stabilisé à partir de sa suspension aqueuse peut être réalisée en mettant en oeuvre n'importe quelle méthode conventionnelle de séparation solide-liquide. En général, le polymère est séparé de ladite suspension par filtration, suivie de lavage à l'eau et de séchage.

Le polyacétal séché obtenu peut être éventuellement ensuite granulé en présence d'additifs conventionnels (antioxydants ...).

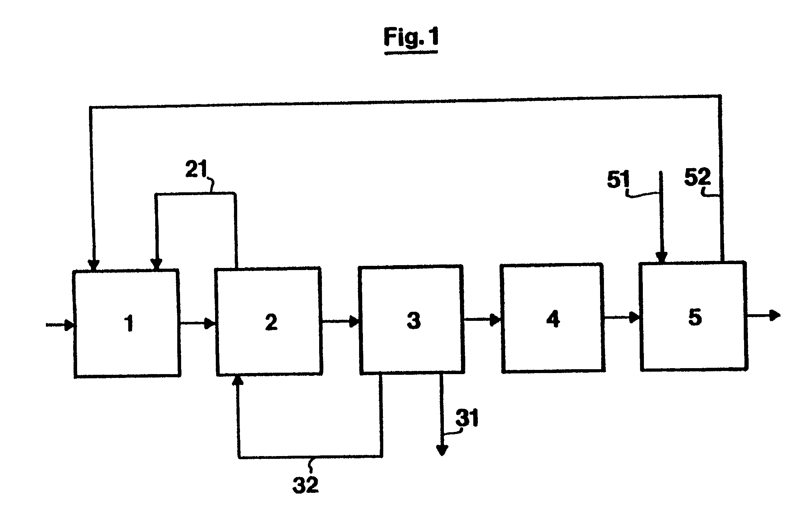

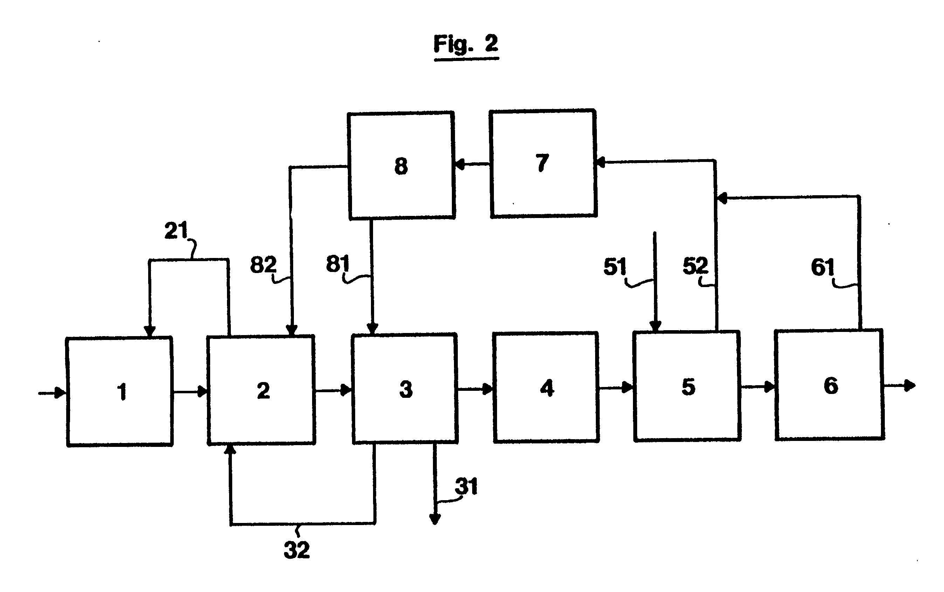

Le procédé selon l'invention est explicité par la description qui suit d'un mode de réalisation pratique. Cette description, donnée à titre d'illustration de l'invention se réfère aux deux feuilles de dessins contenant les figures 1 et 2 annexées. La figure 1 illustre schématiquement (schéma-bloc) un agencement typique des étapes principales constitutives du procédé selon l'invention. La portée de l'invention sera mieux comprise par la comparaison de cette figure 1 à la figure 2 qui illustre schématiquement un agencement conventionnel des étapes principales constitutives d'un procédé selon l'art antérieur (les mêmes repères chiffrés de chacune de ces deux figures se réfèrent respectivement aux mêmes étapes constitutives de chacun des procédés).

D'après ces figures, la synthèse du trioxane s'effectue à l'étape 1 de trimérisation du formaldéhyde en solution aqueuse, par exemple à 55 % en poids, en présence d'un catalyseur acide tel que l'acide phosphorique; comme cette réaction est équilibrée, on déplace l'équilibre par vaporisation d'une partie du milieu de réaction; on travaille typiquement sous vide partiel (par exemple 700 mbar) et à 90°C sous ébullition.

Le trioxane présent dans la phase aqueuse (enrichie par rectification non représentée) en est extrait (étape 2) au moyen d'un solvant organique qui est typiquement une coupe paraffinique en $C_{7-9}$, de manière à séparer une phase aqueuse de formaldéhyde pauvre en trioxane, qui est reconcentrée et renvoyée (21) à l'étape de trimérisation 1 et une phase organique riche en trioxane qui est traitée, à l'étape de rectification-purification 3, dans un train de rectifications de manière à séparer, d'une part l'eau et les impuretés (31) (envoyées à l'incinération) et, d'autre part, la solution de trioxane qui est refroidie pour cristalliser le trimère cyclique, le solvant organique étant renvoyé (32) à l'étape d'extraction 2.

Le trioxane purifié par cristallisation est mis en suspension dans une fraction de solvant d'extraction préalablement épurée et polymérisé (étape 4), typiquement à 60°C en présence d'un initiateur cationique (tel que le $BF_3O(C_2H_5)_2$) et d'oxyde d'éthylène à titre de comonomère.

Le mélange réactionnel provenant de l'étape 4 contient typiquement, en poids, 25 % de copolymère, 25% de trioxane et 50 % de solvant organique et est traité (étape 5) au moyen d'eau (51), typiquement à 150°C, sous une pression moyenne de 8 bar de manière à stabiliser le polymère par hydrolyse.

Se référant plus particulièrement à la figure 2 (agencement conventionnel des étapes) on remarque qu'après l'étape 5, la suspension aqueuse de polymère, détendue à pression atmosphérique, est soumise à un stripping complémentaire 6 nécessaire pour éliminer (61) le solde de solvant organique de cette suspension, avant sa filtration et le lavage et le séchage subséquent du polymère (non représentés). Les vapeurs libérées par la détente (52), contenant du formaldéhyde (typiquement 10 % en poids par rapport au polymère), de l'eau, du trioxane et le solvant organique, sont conduites vers un condenseur (7) suivi d'un décanteur (8), à partir duquel le solvant et du trioxane sont recyclés (81) aux appareils de rectification de l'étape 3 tandis que le solde, comprenant l'eau et le formaldéhyde est renvoyé (82) à l'extraction du trioxane.

Le déroulement du procédé exécuté selon le mode de réalisation pratique illustré schématiquement à la figure 2 est progressivement perturbé par l'entrainement de polymère lors de la détente suivant l'étape 5, obstruant à la longue le condenseur (7) et les circuits de recyclage (52, 61, 81, 82).

Se référant maintenant à la figure 1 (procédé selon l'invention), on remarque que les vapeurs libérées par la détente de la suspension aqueuse de polymère provenant de l'étape 5 sont recyclées (52) directement au réacteur de trimérisation (1). De cette manière, le polymère entraîné est décomposé en formol dans le milieu de trimérisation (1) et ne gêne plus; le trimériseur (1) travaillant sous vide partiel, l'intégralité du solvant organique est éliminée de la suspension aqueuse de polymère; l'étape de stripping (6) devient superflue; cette suspension aqueuse de polymère étant par ailleurs quasi exempte de formol, le formaldéhyde libéré à l'hydrolyse est recyclé directement à la trimérisation sans traitement complémentaire.

**Revendications**

1. Procédé pour la fabrication de polyacétals par polymérisation du trioxane comprenant comme étapes principales successives :

(a) la trimérisation de formaldéhyde en trioxane en phase aqueuse acide sous un vide au moins partiel;

(b) la séparation du trioxane de ladite phase aqueuse;

(c) la purification du trioxane;

(d) la polymérisation, en présence d'un solvant organique choisi parmi les hydrocarbures aliphatiques, cycloaliphatiques, aromatiques et leurs mélanges, du trioxane purifié en présence d'un initiateur cationique et d'un comonomère choisi parmi les éthers cycliques contenant au moins deux atomes de carbone adjacents;

(e) la stabilisation par hydrolyse à chaud sous pression des extrémités des chaînes macromoléculaires du polymère;

(f) la séparation, par détente, du mélange issu de l'étape (e), d'une part, en une suspension aqueuse du polymère stabilisé et, d'autre part, en une phase vapeur contenant le trioxane non polymérisé, le solvant organique, de l'eau et le formaldéhyde généré par l'hydrolyse;

(g) la récupération du polymère stabilisé à partir de sa suspension aqueuse;

caractérisé en ce que la phase vapeur provenant de la séparation par détente du mélange issu de l'étape (e) est recyclée directement à l'étape (a) de trimérisation du formaldéhyde.

2. Procédé selon la revendication 1, caractérisé en ce que la séparation (b) du trioxane de la phase aqueuse comprend l'extraction du trioxane de cette phase aqueuse au moyen d'un solvant organique choisi parmi les hydrocarbures aliphatiques.

3. Procédé selon la revendication 2, caractérisé en ce que l'étape (c) de purification du trioxane comprend la cristallisation d'un mélange contenant le trioxane et le solvant organique d'extraction.

4. Procédé selon l'une des revendications 1 à 3, caractérisé en ce que l'étape (d) de polymérisation est effectuée au sein d'un solvant organique choisi parmi les hydrocarbures aliphatiques.

5. Procédé selon l'une des revendications 2 à 4 caractérisé en ce que le solvant organique au sein duquel est effectuée la polymérisation (d) est le solvant d'extraction.

**Claims**

1. Process for the manufacture of polyacetals by the polymerization of trioxane, which comprises the following successive main stages:

(a) trimerization of formaldehyde into trioxane in an acid aqueous phase under at least a partial vacuum;

(b) separation of the trioxane from the said aqueous phase;

(c) purification of the trioxane;

(d) polymerization, in the presence of an organic solvent chosen from amongst aliphatic, alicyclic and aromatic hydrocarbons and their mixtures, of the purified trioxane in the presence of a cationic initiator and a comonomer chosen from amongst cyclic ethers containing at least two adjacent carbon atoms;

(e) stabilization by hydrolysis, in the heated state, under pressure, of the end groups of the macromolecular chains of the polymer;

(f) separation, by depressurization, of the mixture resulting from stage (e), on the one hand, into an aqueous suspension of the stabilized polymer and, on the other hand, into a vapour phase containing the unpolymerized trioxane, the organic solvent, water and the formaldehyde produced by the hydrolysis; and

(g) recovery of the stabilized polymer from the aqueous suspension thereof;

characterized in that the vapour phase originating from the separation, by depressurization, of the mixture resulting from stage (e) is recycled directly into the formaldehyde trimerization stage (a).

2. Process according to Claim 1, characterized in that the separation (b) of trioxane from the aqueous phase comprises the extraction of trioxane from this aqueous phase with an organic solvent chosen from amongst the aliphatic hydrocarbons.

3. Process according to Claim 2, characterized in that the trioxane purification stage (c) comprises the crystallization of a mixture containing trioxane and the extractant organic solvent.

4. Process according to one of Claims 1 to 3, characterized in that the polymerization stage (d) is carried out in an organic solvent chosen from amongst the aliphatic hydrocarbons.

5. Process according to one of Claims 2 to 4, characterized in that the organic solvent in which the polymerization (d) is carried out is the extractant solvent.

## Patentansprüche

1. Verfahren zur Herstellung von Polyacetalen durch Polymerisation von Trioxan, das als aufeinanderfolgende Hauptschritte umfaßt:

(a) Trimerisation von Formaldehyd in Trioxan in wässriger, saurer Phase unter wenigstens einem Teilvakuum;

(b) Trennen des Trioxans von der wässrigen Phase;

(c) Reinigen des Trioxans

(d) Polymerisation in Anwesenheit eines organischen Lösungsmittels, ausgewählt unter den aliphatischen, zykloaliphatischen, aromatischen Kohlenwaserstoffen und deren Mischungen, des gereinigten Trioxans in Anwesenheit eines kationischen Initiators und eines Comonomers, ausgewählt unter den zyklischen Ethern, die wenigstens zwei benachbarte Kohlenstoffatome enthalten;

(e) Stabilisierung durch Wärmehydrolyse unter Druck der Enden der makromolikularen Ketten des Polymers;

(f) Trennen durch Entspannen, von der aus Schritt (e) erhaltenen Mischung, einerseits in eine wässrige Suspension des stabilisierten Polymers und andererseits, in eine Dampfphase, die das nicht polymerisierte Trioxan, das organische Lösungsmittel, Wasser und Formaldehyd, erzeugt durch die Hydrolyse, enthält;

(g) Wiedergewinnung des stabilisierten Polymers aus seiner wässrigen Suspension,

dadurch gekennzeichnet, daß die Dampfphase, die aus der Trennung durch Entspannung von der aus Schritt (e) erhaltenen Mischung stammt, direkt in Schritt (a) der Trimerisation des Formaldehyds zurückgeführt wird.

2. Verfahren nach Anspruch 1, dadurch gekennzeichnet, daß die Trennung (b) des Trioxans von der wässrigen Phase die Extraktion des Trioxans aus dieser wässrigen Phase mittels eines organischen Lösungsmittels, ausgewählt unter den aliphatischen Kohlenwasserstoffen, umfaßt.

3. Verfahren nach Anspruch 2 dadurch gekennzeichnet, daß Schritt (c) der Reinigung des Trioxans die Kristallisierung einer Mischung, die das Trioxan und das organische Extraktionslösungsmittel enthält, umfaßt.

4. Verfahren nach einem der Ansprüche 1 bis 3, dadurch gekennzeichnet, daß Schritt (d) der Polymerisation in einem organischen Lösungsmittel, ausgewählt unter den aliphatischen Kohlenwasserstoffen, ausgeführt wird.

5. Verfahren nach einem der Ansprüche 2 bis 4, dadurch gekennzeichnet, daß das organische Lösungsmittel, in dem die Polymerisation (d) durchgeführt wird, das Extraktionslösungsmittel ist.

Fig.1

## Fig. 2

EP 0 248 487 B1